# DEMANDE DE BREVET EUROPEEN

(11) **EP 2 230 509 A1**
(43) Date de publication de la demande: **22.09.2010**
(21) Numéro de dépôt: 10290111.3
(22) Date de dépôt: 08.03.2010
(51) Int. Cl.: G01N 27/414, G01N 27/333

(54) **Détection et quantification électrique des ions césium**

(30) Priorité: 18.03.2009 FR 0901253
(71) Demandeur: Commissariat à l'Énergie Atomique et aux Énergies Alternatives, 75015 Paris (FR)
(72) Inventeur: Caillier, Laurent, 06650 Opio (FR); Simonato, Jean-Pierre, 38360 Sassenage (FR)
(74) Mandataire: Noel, Chantal Odile

(57) **Abrégé**

L'invention se rapporte à un appareil et à un procédé de détection et/ou de quantification des ions césium Cs⁺ en solution dans un milieu liquide.

L'appareil de l'invention comprend : a) un dispositif électrique comprenant deux électrodes et un substrat comprenant au moins une partie en un matériau semi-conducteur, les électrodes étant en contact électrique avec ledit matériau semi-conducteur ; et b) un dispositif de mesure de la variation du courant de conduction entre les deux électrodes, et au moins un ligand comprenant au moins un groupement calix[n]arène est lié par greffage au matériau semi-conducteur du substrat du dispositif électrique ou à l'une des électrodes du dispositif électrique.

L'invention trouve application dans le domaine de la détection des ions césium, en particulier.

## Description

L'invention se rapporte à un appareil et à un procédé de détection et/ou de quantification des ions césium Cs⁺.

La source majeure de césium dans l'environnement provient des déchets nucléaires dans lesquels il est l'un des produits de fission les plus nocifs avec le strontium et les différents isotopes de l'uranium.

Le césium 137, émetteur β, présente une longue période radioactive de 30 ans.

Absorbé par l'homme, il y a un période biologique de 100 jours avant élimination de l'élément par l'organisme.

Or le césium est un élément très toxique car il a la capacité de remplacer le potassium dans les cellules et le sang.

Cette propriété est due au fait que le potassium et le césium, ainsi d'ailleurs que le césium et le sodium, ont des propriétés chimiques très voisines.

Du fait de l'ubiquité de Na⁺ et K⁺ dans les effluents radioactifs et plus généralement dans l'environnement il est très difficile de détecter sélectivement le césium dans les milieux liquides.

Différentes méthodes ont été décrites pour la détection du césium telles que :
- la spectroscopie d'absorption atomique,
- la radioanalyse,
- la technique électrochimique utilisée en solution avec une électrode en or modifiée et une électrode de référence. Cette technique est en particulier décrite dans le brevet US 6,924,380,
- l'utilisation d'un système SAW pour « Surface Acoustic Wave » décrit par Pinnaduwage *et al*. basé sur le greffage de dérivés de calixarènes sur un microcantilever. En effet, les calix[n]arènes sont connus pour leurs propriétés de complexation des métaux lourds, comme décrit par Ikeda et al., Chem. Rev. 1997, 97, 1713-1734 et Böhmer et al. Chem., Int. Ed. Engl. 1995, 34, 713-745.

Les calix[n]arènes sont des macrocycles connus. Dans la dénomination « calix[n]arène », n indique le nombre de motifs arène dans les macrocycles. Ces composés sont également appelés ci-après « groupement calixarène ou groupement calix[n]arène ».

Les propriétés de complexation des calix[n]arènes découlent directement de la structure du coeur macrocyclique de la molécule et peuvent être modulées par la variation de différents substituants portés par cette molécule.

Plus spécifiquement, les dérivés de type calix[4]arènes en conformation 1,3 alternée et portant un 6-éther couronne semblent être des ligands spécifiques de l'ion césium selon Guillon et al. J. Org. Chem., 2000, 65 (24) 8283-8289.

Ainsi, Moyer *et al*. ont proposé l'extraction spécifique du césium d'un milieu liquide par des calixarènes éthers couronnes dans le brevet US 6,174,503 B1.

Cependant, de par leurs technologies lourdes ou leurs faibles sélectivités, ces différentes techniques de l'art antérieur apparaissent peu adaptées pour la fabrication de capteurs sensibles, de très petite taille, à bas coût et nécessitant peu d'énergie pour fonctionner.

D'une manière remarquable, les inventeurs ont constaté que la complexation de l'élément césium par un ligand comprenant un groupement calix[n]arène greffé sur ou à proximité d'un matériau semi-conducteur modifie l'environnement électrostatique de ce matériau semi-conducteur alors qu'a priori on aurait pu penser que le groupement calix[n]arène aurait agi tel un écran en raison de sa taille et de sa densité d'électrons, masquant ainsi la variation de charge électrostatique induite.

Dès lors, l'invention propose un appareil de détection et/ou de quantification des ions césium Cs⁺ en solution dans un milieu liquide comprenant :
- un dispositif électrique comprenant deux électrodes et un substrat comprenant au moins une partie en un matériau semi-conducteur, les électrodes étant en contact électrique avec ledit matériau semi-conducteur, et
- un dispositif de mesure de la variation du courant de conduction entre les deux électrodes,
**caractérisé en ce qu**'au moins un ligand, comprenant au moins un groupement calix[n]arène et au moins un groupement de greffage, est lié par greffage au matériau semi-conducteur du substrat du dispositif électrique ou à l'une des électrodes du dispositif électrique.

Le matériau semi-conducteur est choisi parmi les matériaux à base de carbone, les matériaux à base de silicium, les matériaux à base de germanium, les matériaux à base de zinc, les matériaux à base de gallium, les matériaux à base d'indium, les matériaux a baste de cadmium ou un matériau semi-conducteur organique, de préférence, le poly(3,4-éthylènedioxythiophène)/poly(styrène sulfonate).

Quant aux électrodes, elles sont en un matériau choisi parmi l'or, l'argent, le palladium, le platine, le titane, le cuivre, le nickel et les nanotubes de carbone.

De préférence, ledit au moins un ligand calix[n]arène est un calix[4]arène en conformation 1,3 alternée -6-éther couronne.

Dans un mode de réalisation de l'appareil de l'invention, le au moins un ligand est lié par greffage au matériau semi-conducteur du substrat du dispositif électrique, le matériau semi-conducteur est un matériau à base de silicium, c'est-à-dire comprenant 20 % en poids de silicium. De préférence, il est constitué de nanofils et/ou de nanotubes de silicium non oxydé. Dans ce cas, le au moins un ligand comprend un groupement de greffage choisi parmi un groupement alcyne, un groupement alcène ou un groupement précurseur radicalaire tel qu'un groupement diazonium et un groupement triazonium.

Dans un autre mode de réalisation de l'appareil de l'invention, le au moins un ligand est lié par greffage au matériau semi-conducteur du substrat du dispositif électrique, le matériau semi-conducteur du substrat est un matériau à base de silicium oxydé, de préférence constitué de nanofils et/ou de nanotubes de silicium oxydé en surface, et le au moins un ligand comprend un groupement de greffage choisi parmi un groupement silane, de préférence, trialcoxysilane ou trihalogénosilane, le plus préférablement triméthoxysilane ou trichlorosilane.

Dans encore un autre mode de réalisation de l'appareil de l'invention, le au moins un ligand est lié à des nanofils et/ou nanotubes de carbone et comprend un groupement de greffage choisi parmi un groupement précurseur radicalaire tel qu'un groupement diazonium, un groupement triazonium, un groupement aromatique ou hétéroaromatique, tel qu'un groupement pyrène, un groupement anthracène, un groupement porphyrine ou un groupement amine ou un groupement alcool.

Dans tous les modes de réalisation et variantes de l'invention, de préférence le au moins un ligand comprend de plus un groupement espaceur lié par une extrémité au groupement de greffage et à l'autre extrémité au groupement calix[n]arène.

De préférence, dans l'appareil de détection de l'invention le ligand est choisi parmi le 25,27 Bis(1-pyrène-1-yl-oxycarbonylméthoxy) calix[4] arène-couronne-6-1,3-alterné de formule I suivante : 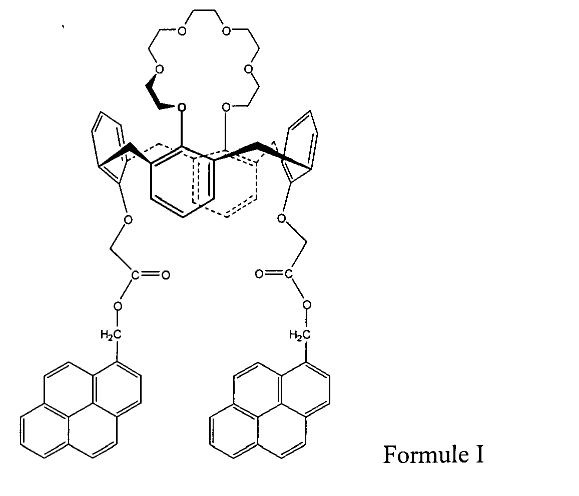 et le 25,27 Bis(prop-2-ynyl-oxycarbonylméthoxy) calix[4] arène-couronne-6-1,3-alterné de formule II suivante :

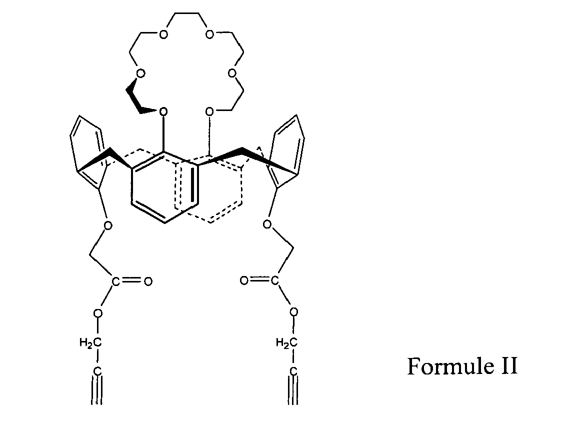

L'invention propose aussi un procédé de détection et/ou de quantification des ions césium Cs⁺ en solution dans un milieu liquide **caractérisé en ce qu'**il comprend :
- la mise en contact dudit milieu liquide avec le dispositif électrique de l'appareil de détection et/ou de quantification de l'invention, et
- la mesure de la variation du courant de conduction entre les deux électrodes du dispositif électrique de l'appareil de détection avec le dispositif de mesure de la variation du courant de conduction de l'appareil de l'invention.

L'invention sera mieux comprise et d'autres avantages et caractéristiques de celle-ci apparaîtront plus clairement à la lecture de la description explicative qui suit.

L'invention est basée sur la découverte que la complexation d'un ions césium par un groupement calixarène modifie l'environnement électrostatique d'un matériau semi-conducteur sur lequel le groupement calixarène est greffé ou à proximité duquel il est greffé et que cette variation de l'environnement électrostatique pouvait être mesurée par un dispositif électrique.

Le groupement calixarène étant un groupement complexant sélectivement les ions césium Cs⁺, par rapport aux ions Na⁺ et K⁺, on obtient une détection et/ou une quantification très sélective de l'ion césium Cs⁺ dans un milieu liquide avec l'appareil de l'invention, en raison en particulier de la proximité du groupement calix[n]arène et du matériau semi-conducteur.

De préférence, le milieu liquide est un milieu aqueux.

Ainsi, dans l'invention, on détecte, via un dispositif électrique la présence d'au moins un ion Cs⁺ séquestré par un groupement calixarène qui est au voisinage du dispositif électrique.

Dès lors, l'appareil de détection et/ou de quantification des ions césium Cs⁺ comprend un dispositif électrique comprenant deux électrodes et un substrat comprenant au moins une partie en un matériau semi-conducteur, et un dispositif de mesure du courant de conduction entre les deux électrodes.

Pour détecter et/ou quantifier les ions Cs⁺, au moins un ligand comprenant un groupement calixarène est greffé soit sur le matériau semi-conducteur du substrat, soit sur une des électrodes. Le greffage permet d'obtenir un appareil de détection et/ou de quantification ayant une longue durée de vie car il permet de maintenir de façon pérenne le groupement calix[n]arène sur le, ou à proximité du, matériau semi-conducteur, contrairement à une encapsulation du groupement calixarène dans une membrane qui s'érode en cours d'utilisation.

Le dispositif électrique peut être de type résistif ou de type transistor à effet de champ.

La partie du substrat en matériau semi-conducteur joue le rôle de canal de conduction entre les deux électrodes qui sont en contact électrique avec la au moins une partie en matériau semi-conducteur.

Le matériau semi-conducteur peut être un matériau à base de carbone, de silicium, de germanium, de zinc, de gallium, d'indium, de cadmium, ou d'un matériau semi-conducteur organique tel que le poly(3,4-éthylènedioxythiophène)/poly(styrène sulfonate).

De préférence, le matériau semi-conducteur est constitué de nanofils et/ou de nanotubes de silicium ou de nanofils et/ou de nanotubes de carbone.

Quant aux électrodes, elles peuvent être en or, en argent, en palladium, en platine, en titane, en cuivre ou en nickel, mais également elles peuvent être constituées de nanotubes de carbone.

Pour greffer le groupement calixarène soit sur l'électrode, soit sur la partie en matériau semi-conducteur du substrat du dispositif électrique, le ligand comprend également un groupement de greffage qui est adapté au matériau sur lequel il est greffé. Ce ligand sera également appelé ligand calixarène dans ce qui suit.

Ainsi, pour un greffage sur silicium, c'est-à-dire dans le cas où le matériau semi-conducteur est en silicium ou constitué de nanofils et/ou de nanotubes de silicium, le groupement de greffage du ligand utilisé dans l'invention est choisi parmi un groupement alcyne, un groupement alcène, un groupement diazonium, un groupement triazène ou un groupement précurseur radicalaire.

Cela est valable pour tous les matériaux à base de silicium.

A cet égard, par matériau à base de X, on entend un matériau comprenant au moins 20 % en moles, par rapport au nombre total de moles de matériau, de X.

Lorsque le matériau sur lequel est greffé le ligand utilisé dans l'invention est en silicium mais recouvert d'une fine couche d'oxyde, comme de l'oxyde natif par exemple, le groupement de greffage est de préférence choisi parmi un radical silane, tel qu'un radical trialcoxysilane ou trihalogénosilane.

De préférence, dans ce cas on utilisera un groupement triméthoxysilane ou trichlorosilane.

Mais, il apparaîtra clairement à l'homme de l'art, que tout autre groupement de greffage se liant à la surface de l'oxyde pourra être utilisé.

De la même façon, il apparaîtra clairement à l'homme de l'art, que le greffage du ligand calixarène peut être réalisé en une ou plusieurs étapes.

Ainsi, il est par exemple possible de faire réagir la surface de la partie en matériau semi-conducteur du substrat du dispositif électrique de l'appareil de détection et/ou de quantification des ions Cs⁺ de l'invention avec une première molécule, et de faire ensuite réagir un groupement de cette molécule greffée sur la surface du matériau semi-conducteur avec une molécule organique comprenant le groupement calixarène lui-même.

Par exemple, le silicium ou son oxyde natif pourront être fonctionnalisés par une première série de molécules organiques comportant des fonctions terminales sur lesquelles le ligand sera greffé dans un second temps par les techniques classiques de la synthèse organique, organométallique ou inorganique.

Lorsque le ligand est greffé sur un matériau semi-conducteur à base de carbone ou constitué de carbone, comme par exemple des nanotubes de carbone, le groupement de greffage sera choisi parmi un groupement précurseur radicalaire tel qu'un groupement diazonium, un groupement triazonium ou encore parmi toute molécule susceptible de former des liaisons covalentes avec les atomes de carbone, un groupement aromatique ou hétéroaromatique tel que par exemple un groupement pyrène, un groupement anthracène, un groupement porphyrine ou un groupement amine ou un groupement alcool pour une réaction avec les acides carboxyliques présents à la surface du carbone, éventuellement après inactivation chimique, par exemple avec un agent de couplage, pour la formation d'ester ou d'amide.

Avantageusement, dans l'appareil de détection et/ou de quantification des ions Cs⁺ selon l'invention, le ligand utilisé dans l'appareil de détection de l'invention comprend, outre le groupement de greffage dédié au greffage du groupement calixarène sur le matériau semi-conducteur ou sur les électrodes, une partie espaceur qui permet de moduler la distance entre le groupement calixarène lui-même et le matériau semi-conducteur ou les électrodes.

Cet espaceur peut être une chaîne alkyle en C₁ à C₂₀, linéaire, pouvant contenir un ou plusieurs hétéroatomes, tels que O, S et N et/ou un radical aromatique tel qu'un groupement benzyle, et/ou un radical hétéroaromatique tel qu'un groupement furane ou un groupement pyridine.

La structure de l'appareil obtenu est simple, et permet une production à bas coût et à grande échelle.

De plus, du fait de cette structure simple, l'appareil peut être de très petite taille, nécessitant peu d'énergie pour fonctionner et favorisant sa portabilité.

Avec l'appareil de l'invention, on peut détecter de façon sélective et sensible des ions Cs⁺ dans un milieu liquide, en particulier aqueux, et également quantifier les ions Cs⁺ par un simple étalonnage du dispositif électrique permettant de relier la valeur de la variation du courant de conduction traversant le matériau semi-conducteur entre les deux électrodes et la concentration de solution étalon contenant des quantités connues d'ions Cs⁺.

Ainsi, le procédé pour détecter et/ou quantifier les ions Cs⁺ selon l'invention comprend une étape de mise en contact de l'échantillon susceptible de contenir des ions Cs⁺ avec le dispositif électrique de l'appareil de l'invention et la mesure de la variation du courant de conduction se produisant lors de cette mise en contact avec le dispositif de mesure du courant de conduction de l'appareil de l'invention.

Afin de mieux faire comprendre l'invention, on va maintenant en décrire, à titre purement illustratif et non limitatif, plusieurs modes de réalisation.

### Exemple 1 : Capteur résistif à base d'un tapis de nanotubes de carbone à simple paroi (SWCNT) fonctionnalisés.

Dispositif électrique :
Le substrat est un wafer Si / SiO₂. Les électrodes interdigitées (W = 10.000 nm et L = 50 nm) utilisées sont constituées d'un empilement de couches de Titane (5 nm) et d'or (30 nm). 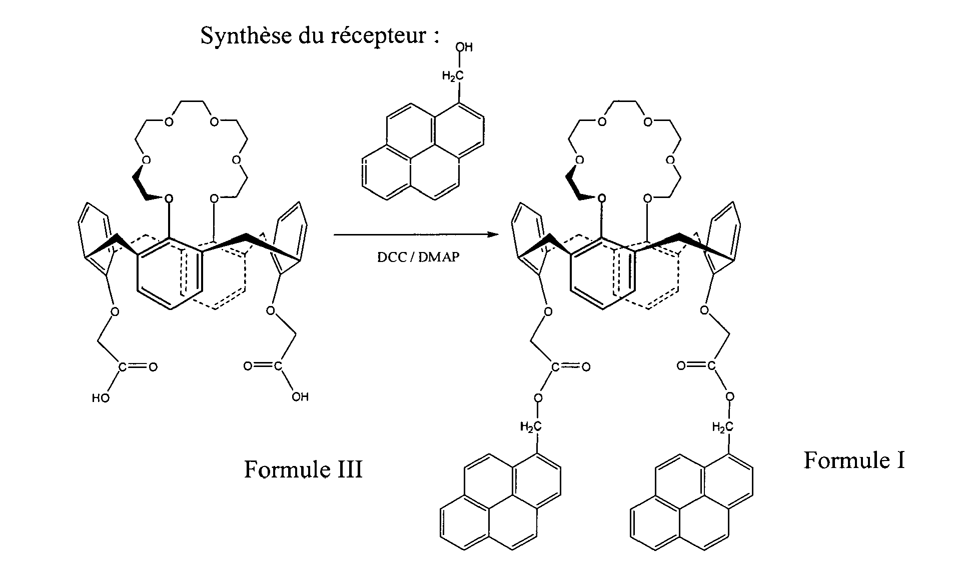
On fait réagir dans le dichlorométhane 1 équivalent du composé de formule III, obtenu selon la procédure décrite par Guillon et coll. (J. Org. Chem., 2000, 65, 24), avec 2 équivalents de 1-Pyrèneméthanol en présence de 2 équivalents de Dicyclohéxylcarbodiimide (DCC) et d'une quantité catalytique de 4-Diméthylaminopyridine (DMAP). Après traitement et purification, le composé de formule I est obtenu avec un rendement supérieur à 20 %.

Fabrication du capteur :
La première étape de fabrication consiste à déposer par spray, à l'aide d'un aérographe sur le dispositif un tapis homogène de SWCNT entre les électrodes.
Dans une seconde étape, la couche de nanotubes déposée est fonctionnalisée en solution (1 mmol/L) par le récepteur de formule I.

### Exemple 2 : Test des capteurs de l'exemple 1

Chaque dispositif de test est immergé dans une solution contenant des ions Cs⁺ à 1 mmol/L puis rincé à l'eau déionisée. Le dispositif est ensuite séché à l'air pendant 5 min. La complexation des ions Cs⁺ sur ses ligands spécifiques entraîne une modification de la résistance du dispositif. Une variation relative de la résistance du dispositif |ΔR/R| supérieure à 10% a été mesurée.

### Exemple 3 : Capteur à base de transistor pseudo-MOS

Dispositif électrique :
Le transistor a été fabriqué sur du SOI (Silicon On Insulator) où le matériau semi-conducteur est un nanofil de silicium gravé de 280nm de large, 4 µm de long et 16 nm d'épaisseur gravé sur une couche d'oxyde de silicium de 77 nm.
Synthèse du récepteur : 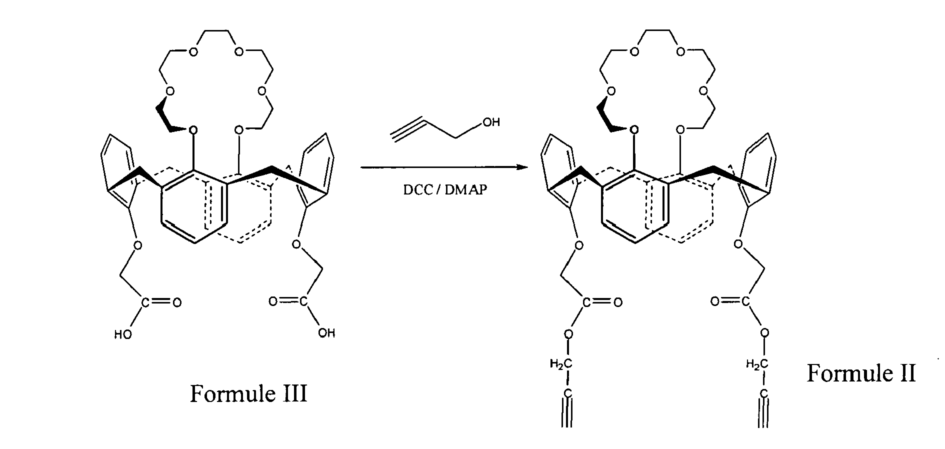
On fait réagir dans le dichlorométhane 1 équivalent du composé de formule III, obtenu selon la procédure décrite par Guillon et coll. (J. Org. Chem., 2000, 65, 24), avec 2 équivalents d'alcool propargylique en présence de 2 équivalents de Dicyclohéxylcarbodiimide (DCC) et d'une quantité catalytique de 4-Diméthylaminopyridine (DMAP). Après traitement et purification, le récepteur de formule II est obtenu avec un rendement supérieur à 20%.
Fabrication du capteur :
   Le récepteur de formule II est greffé sur le dispositif de test par hydrosilylation thermique. Le dispositif est nettoyé à l'aide d'une solution piranha puis traité avec une solution de HF 1%. Le dispositif activé est chauffé à reflux pendant 2 heures dans une solution à 0,5 mM du récepteur dans le mesitylène. Le dispositif est ensuite rincé au dichlorométhane.

### Exemple 4 : Test des capteurs de l'exemple 2

Chaque dispositif de test est immergé dans une solution contenant des ions Cs⁺ à 1 mmol/L puis rincé à l'eau déionisée. Le dispositif est ensuite séché à l'air pendant 5 min. Une modification de la réponse du transistor avec un décalage de la tension de seuil de 3V est vue.

## Revendications

1. Appareil de détection et/ou de quantification des ions césium Cs⁺ en solution dans un milieu liquide comprenant :
- un dispositif électrique comprenant deux électrodes et un substrat comprenant au moins une partie en un matériau semi-conducteur, les électrodes étant en contact électrique avec ledit matériau semi-conducteur, et
- un dispositif de mesure de la variation du courant de conduction entre les deux électrodes,
**caractérisé en ce qu'**au moins un ligand comprenant au moins un groupement calix[n]arène et au moins un groupement de greffage est lié par greffage au matériau semi-conducteur du substrat du dispositif électrique ou à l'une des électrodes du dispositif électrique.

2. Appareil de détection selon la revendication 1 **caractérisé en ce que** le matériau semi-conducteur est choisi parmi les matériaux à base de carbone, les matériaux à base de silicium, les matériaux à base de germanium, les matériaux à base de zinc, les matériaux à base de gallium, les matériaux à base d'indium, les matériaux à base de cadmium ou un matériau semi-conducteur organique, de préférence, le poly(3,4-éthylènedioxythiophène)/poly(styrène sulfonate).

3. Appareil de détection selon la revendication 1 ou 2 **caractérisé en ce que** les électrodes sont en un matériau choisi parmi l'or, l'argent, le palladium, le platine, le titane, le cuivre, le nickel et les des nanotubes de carbone.

4. Appareil de détection selon l'une quelconque des revendications précédentes **caractérisé en ce que** ledit au moins un motif calix[n]arène est un motif calix[4]arène en conformation 1,3 alternée -6-éther couronne.

5. Appareil de détection selon l'une quelconque des revendications précédentes,
**caractérisé en ce que** :
- le au moins un ligand est lié par greffage au matériau semi-conducteur du substrat du dispositif électrique,
- le matériau semi-conducteur du substrat du dispositif électrique est un matériau à base de silicium, de préférence constitué de nanofils et/ou de nanotubes de silicium non oxydés,
et **en ce que**
- le au moins un ligand comprend un groupement de greffage choisi parmi un groupement alcyne, un groupement alcène tel qu'un groupement précurseur radicalaire, un groupement diazonium, un groupement triazonium.

6. Appareil de détection selon l'une quelconque des revendications 1 à 4 **caractérisé en ce que** :
- le au moins un ligand est lié par greffage au matériau semi-conducteur du substrat du dispositif électrique,
- le matériau semi-conducteur du substrat du dispositif électrique est un matériau à base de silicium oxydé, de préférence constitué de nanofils et/ou de nanotubes de silicium oxydé en surface, et **en ce que**
- le au moins un ligand comprend un groupement de greffage choisi parmi un groupement silane, de préférence, trialcoxysilane ou trihalogénosilane, le plus préférablement, triméthoxysilane ou trichlorosilane.

7. Appareil de détection selon l'une quelconque des revendications 1 à 4 **caractérisé en ce que** le au moins un ligand est lié par greffage à des nanofils et/ou nanotubes de carbone et **en ce que** le ligand comprend un groupement de greffage choisi parmi un groupement précurseur radicalaire tel qu'un groupement diazonium, un groupement triazonium, un groupement aromatique ou hétéroaromatique, tel qu'un groupement pyrène, un groupement anthracène, un groupement porphyrine ou un groupement amine ou un groupement alcool.

8. Appareil de détection selon l'une quelconque des revendications précédentes **caractérisé en ce que** le au moins un ligand comprend de plus un groupement espaceur lié par une extrémité au groupement de greffage et à l'autre extrémité au groupement calix[n]arène.

9. Appareil de détection selon l'une quelconque des revendications précédentes **caractérisé en ce que** le ligand est choisi parmi le 25,27 Bis(I-pyrène-1-yl-oxycarbonylméthoxy) calix[4] arène-couronne-6-1,3-alterné de formule I suivante : 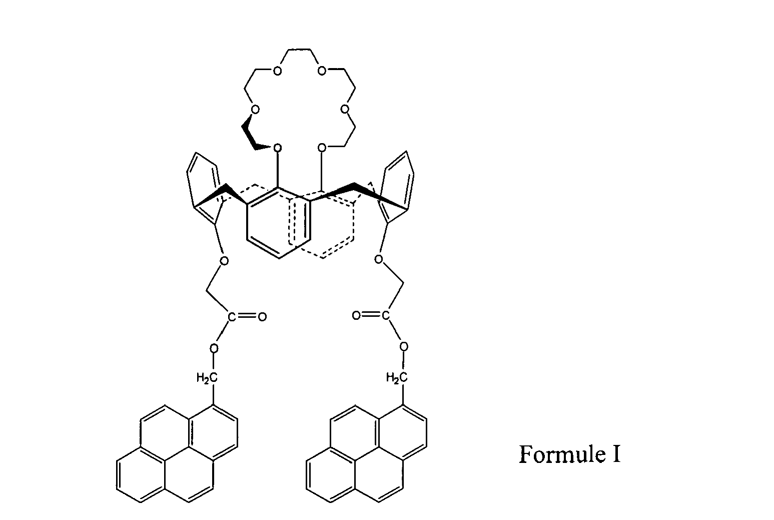 et le 25,27 Bis(prop-2-ynyl-oxycarbonylméthoxy) calix[4] arène-couronne-6-1,3-alterné de formule II suivante :

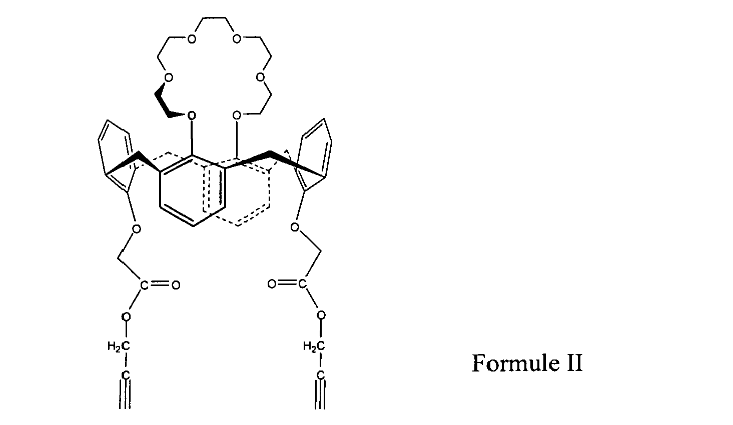

10. Procédé de détection et/ou de quantification des ions césium Cs⁺ en solution dans un milieu liquide **caractérisé en ce qu'**il comprend :
- la mise en contact dudit milieu liquide avec le dispositif électrique de l'appareil de détection et/ou de quantification selon l'une quelconque des revendications précédentes, et
- la mesure de la variation du courant de conduction entre les deux électrodes du dispositif avec le dispositif de mesure de la variation du courant de conduction de l'appareil de détection selon l'une quelconque des revendications précédentes.
